Europäisches Patentamt

European Patent Office

Office européen des brevets

(11) Publication number: **0 058 074**
**B1**

(12) **EUROPEAN PATENT SPECIFICATION**

(45) Date of publication of patent specification: **23.01.85**

(51) Int. Cl.⁴: **B 01 D 11/04**

(21) Application number: **82300607.7**

(22) Date of filing: **08.02.82**

(54) **Liquid-liquid contacting process.**

(30) Priority: **06.02.81 GB 8103767**

(43) Date of publication of application:
**18.08.82 Bulletin 82/33**

(45) Publication of the grant of the patent:
**23.01.85 Bulletin 85/04**

(84) Designated Contracting States:
**AT BE CH DE FR IT LI NL SE**

(56) References cited:
**DE-A-2 557 327**
**DE-A-2 852 114**
**DE-B-1 206 393**
**DE-B-1 261 479**

(73) Proprietor: **Priestley, Ronald**
**84 Chesterwood Road**
**Birmingham B13 (GB)**

(72) Inventor: **Priestley, Ronald**
**84 Chesterwood Road**
**Birmingham B13 (GB)**

(74) Representative: **Collingwood, Anthony Robert**
**et al**
**LEWIS W. GOOLD & CO. Whitehall Chambers 23**
**Colmore Row**
**Birmingham B3 2BL (GB)**

Courier Press, Leamington Spa, England.

EP 0 058 074 B1

## Description

A wide variety of liquid-liquid contacting processes are known for the separation of a component from a mixture. The processes are applicable when the components to be separated distribute themselves differently in two liquid phases.

One known process is that suggested in DE—B—1206393 in which a vertical column has baffles or packing and the liquids are passed through the column counterflow to fine bubbles of gas, in particular air. It is said that the intensive contact between the gas bubbles and the liquid promotes material exchange through movements of the phase boundary layers.

Another known process according to GB—A—1409045 is based on the fact that the droplets of organic phase tend to coalesce on low surface energy materials such as polypropylene, whereas the aqueous phase tends to coalesce on high surface energy material such as stainless steel, the invention of the reference is based on separation by using baffles or packings made of wire and filament which use both high surface energy and low surface energy materials.

According to the present invention, a contacting process for aqueous and organic liquid phases involves flowing the two phases over a bed of low surface-energy material provided by or on strands, characterised in that a gas is introduced into said bed and allowed to be dispersed into the organic phase by letting it rise through the low surface-energy material.

The manner in which the invention works is not clearly understood, but such explanations as are possible are included later in this description.

The invention is based on the discovery that a very marked increase in the efficiency of contacting results from the mentioned factors (i.e. the bed of said material and the gas introduction). The mechanism is different from that of gas agitation, because the gas becomes dispersed in the organic phase, and the reduction in capacity with the known gas agitation is avoided.

Examples of contacting apparatus where this invention increases the efficiency are:

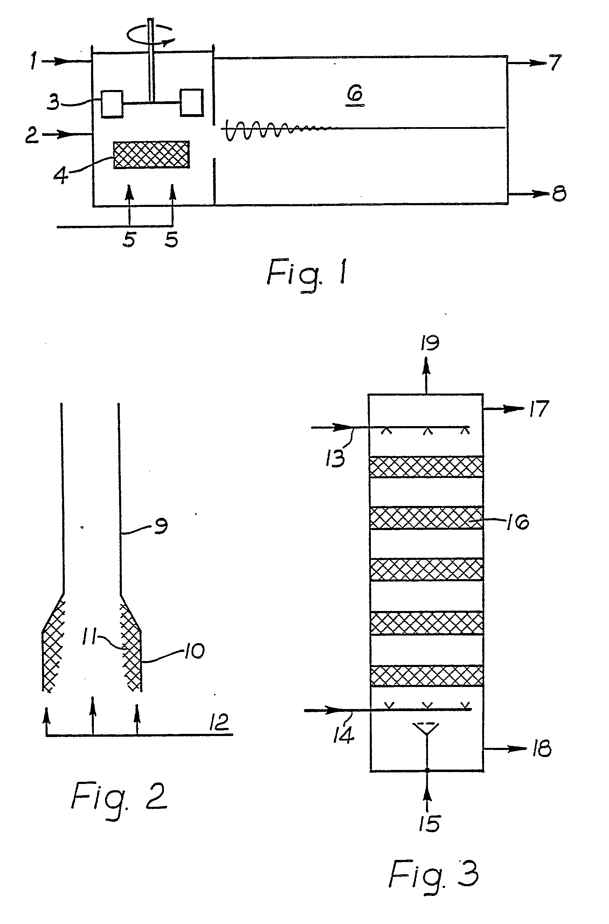

(1) In the mixer section of a mechanically agitated mixer-settler contactor (Figure 1).

A solvent stream (1) and an aqueous solution (2) are fed to the mixer section which is stirred by a stirrer (3). Below the stirrer is a disc of knitted polypropylene fibre (4). Gas is introduced at (5) so that it rises into the knitted disc. The mixture of liquid phases flows to the settling section (6) from which the extract (7) is removed separately from the water (8).

(2) In a gas agitated mixer with a lift tube (9) as illustrated in Figure 2.

The lift or tubular draft tube (9) is fitted with a large diameter section at the base (10). Knitted polypropylene (11) is fitted inside this expanded section.

Gas is introduced into the mixer through a sparge pipe (12) arranged so that some of the gas rises through the knitted polypropylene section.

(3) In a countercurrent liquid-liquid extraction column as in Figure 3.

The aqueous solution is added to the column via a distributor (13) at the top and the organic solvent at the base (14). Gas is introduced at (15). The column is packed with discs of knitted polypropylene (16) which cover the full cross section of the column.

After being brought into contact countercurrently the extract (organic) phase is removed from the column at (17) and the aqueous raffinate at (18). Gas is removed from the top of the column (19) and may be recycled to the base (15).

In these examples quoted above, the gas when brought into contact with the organic phase in the presence of the low surface energy polypropylene surface is dispersed in the organic phases. With the kerosine-water-air system for example the air is dispersed in the form of very small (1 mm) diameter bubbles (probably due to the low surface-energy material) to the extent that the density of the disperse phase may easily be halved. In consequence, the interfacial area for mass transfer is obviously increased per unit mass of solvent. In addition, the viscosity of the disperse phase is reduced so that the interfacial area is also increased because of the smaller droplet size.

The mass transfer rates were compared in a nominal 15 cm diameter column using the water-kerosine benzoic acid system. The column was packed with stainless steel-polypropylene discs as described in GB—A—1,409,045.

The conditions were:

| | |
|---|---|
| water phase velocity | 27 cm/min |
| kerosine phase velocity | 40 cm/min |

Without air dispersion, the height of a transfer unit was 3.7 metres. With air added equivalent to a velocity of 50 cm/min the height of a transfer unit was reduced to 1.3 metres.

The capacity of the column (as limited by the rate of coalescence) was at least 10% greater with an air-dispersed phase over a wide range of solvent/aqueous phase ratios.

It is believed that the knitted condition of the strands is not essential, but the presence of small loops in the strands or filamentary material is important in the generation of gas dispersed droplets.

The significance of the low surface-energy material depends upon this material being effectively exposed to the liquids/gas and consequently the material could be coated as a surface layer on a relatively inert carrier material.

Low surface-energy materials such as polypropylene are effectively hydrophobic and it is this property combined with its effect on bubble size which may produce the good results.

## Claims

1. A contacting process for an aqueous and an organic liquid phase involving flowing the two phases over a bed of low surface-energy material provided by or on strands, characterised in that a gas is introduced into said bed and allowed to be dispersed into the organic phase by letting it rise through the low surface-energy material.

2. A process as claimed in Claim 1 wherein the strands are in the form of loops.

3. A process as claimed in Claim 1 or Claim 2 wherein the strands comprise low surface energy material on an inert carrier.

4. A process as claimed in any preceding claim wherein the liquid phases and the gas are mechanically stirred.

5. A process as claimed in any preceding claim wherein the liquid phases and the gas are fed to a lift tube (9) to flow through a passage lined with said low surface-energy material.

6. A process as claimed in any of Claims 1—3 wherein the liquid phases flow in countercurrent directions through a column and the low surface energy material is provided in the column.

## Revendications

1. Procédé de contact pour une phase aqueuse et une phase liquide organique comprenant l'écoulement des deux phases sur un lit de matière à failbe énergie superficielle établi par ou sur des cordons, caractérisé en ce qu'un gaz est introduit dans ledit lit et en ce qu'on lui permet de se disperser dans la phase organique en le laissant s'élever à travers la matière à faible énergie superficielle.

2. Procédé selon la revendication 1, dans lequel les cordons sont sous forme de boucles.

3. Procédé selon la revendication 1 ou la revendication 2, dans lequel les cordons comprennent une matière à faible énergie superficielle sur un support inerte.

4. Procédé selon l'une quelconque des revendications précédentes, dans lequel les phases liquides et le gaz sont agités mécaniquement.

5. Procédé selon l'une quelconque des revendications précédentes, dans lequel les phases liquides et le gaz sont amenés à un tube de montée (9) pour s'écouler à travers un passage revêtu de ladite matière à faible énergie superficielle.

6. Procédé selon l'une quelconque des revendications 1—3, dans lequel les phases liquides s'écoulent en des sens à contre-courant à travers une colonne et la matière à faible énergie superficielle est établie dans la colonne.

## Patentansprüche

1. Kontaktverfahren für eine wässrige und eine organische flüssige Phase, in dem die beiden Phasen über ein Bett aus Material mit niedriger Oberflächenenergie fließt, das durch oder auf Strähnen gebildet ist, dadurch gekennzeichnet, daß in das Bett ein Gas eingeführt und daß es dem Gas ermöglicht wird, in die organische Phase zu dispergieren, indem man es durch das Material niedriger Oberflächenenergie aufsteigen läßt.

2. Verfahren nach Anspruch 1, dadurch gekennzeichnet, daß die Strähnen in Form von Schlaufen sind.

3. Verfahren nach Anspruch 1 oder 2, dadurch gekennzeichnet, daß die Strähnen ein Meterial niedriger Oberflächenenergie auf einem inerten Träger enthalten.

4. Verfahren nach einem der vorhergehenden Ansprüche, dadurch gekennzeichnet, daß die Flüssigkeitsphasen und das Gas mechanisch verrührt werden.

5. Verfahren nach einem der vorhergehenden Ansprüche, dadurch gekennzeichnet, daß die flüssigen Phasen und das Gas in ein Steigrohr (9) eingespeist werden, um durch einen Kanal zu fließen, der mit dem genannten Material mit niedriger Oberflächenenergie ausgekleidet ist.

6. Verfahren nach einem der Ansprüche 1 bis 3, dadurch gekennzeichnet, daß die flüssigen Phasen in Gegenstromrichtungen durch eine Kolonne fließen und das Material mit niedriger Oberflächenenergie in der Kolonne vorgesehen ist.

Fig. 1

Fig. 2

Fig. 3